# EUROPÄISCHE PATENTSCHRIFT

(11) **EP 1 408 155 B1**
(45) Veröffentlichungstag und Bekanntmachung des Hinweises auf die Patenterteilung: **20.12.2006**
(21) Anmeldenummer: 03022664.1
(22) Anmeldetag: 07.10.2003
(51) Int. Cl.: D21H 17/13, D21H 17/07

(54) **Zusammensetzung zur Behandlung eines hydrophilen Papierproduktes**
Composition for treating a hydrophilic paperproducts
Composition pour le traitement d'un produit hydrophile en papier

(30) Priorität: 08.10.2002 DE 10246836
(43) Veröffentlichungstag der Anmeldung: 14.04.2004
(73) Patentinhaber: Schill & Seilacher Aktiengesellschaft, 71032 Böblingen (DE)
(72) Erfinder: Mayer, Gerhard, Dr., 71272 Renningen (DE); Spitzner, Hartmut, Dr., 01277 Dresden (DE)
(74) Vertreter: UEXKÜLL & STOLBERG

(56) Entgegenhaltungen:
- WO-A-02/38852
- DE-A- 3 705 121
- DE-A- 19 853 720
- US-A- 4 384 130
- US-A- 5 573 637
- US-A- 5 725 736
- US-A- 5 948 540

## Beschreibung

Gegenstand der Erfindung sind Zusammensetzungen zur Behandlung eines hydrophilen Papierprodukts, ein sogenanntes Tissuepapier, und deren Verwendung, ein Verfahren zur Herstellung eines solchen Papierprodukts sowie das dadurch erhaltene Papierprodukt. Dieses ist ein Tissuepapierprodukt, das in seiner Wasseraufnahmefähigkeit nicht beeinträchtigt ist und sich durch sehr gute Weichheit auszeichnet.

Tissuepapier ist ein Erzeugnis aus mechanisch oder chemisch aufgeschlossenen Pflanzenfasern, die in einem Papiererzeugungsprozess miteinander verfilzt und unter Zugabe verschiedener Hilfsstoffe, wie z.B. Füllstoffe, Farbe und Leim, aber auch anderer Fasern wie Celluloseregeneratfasern oder synthetische Fasern (z. B. aus Polypropylen, Polyester, Polyamid oder anderen Polymeren, auch Copolymeren) in eine Blattform gebracht werden. Neben maschinentechnischen Verfahren und der Auswahl geeigneter Cellulosefasern spielen insbesondere chemische Zusätze und Additive eine wesentliche Rolle bei der Erreichung der gewünschten Eigenschaften. Tissuequalitäten sind Papierqualitäten mit besonders niedrigem Flächengewicht und werden ohne Holzschliff hergestellt, das Basismaterial besteht lediglich aus Cellulosefasern unterschiedlicher Herkunft, welche mit geeigneten Verfahren gewonnen und behandelt wurden. Derartige Tissuepapierprodukte finden insbesondere Anwendung als Hygienepapiere. Beispiele für Hygienepapiere sind z.B. Toilettenpapiere, Taschentücher, Gesichtstücher, Kosmetiktücher, Küchentücher oder Papierhandtücher. An die unterschiedlichen Produkte werden je nach Verwendungszweck unterschiedliche Anforderungen hinsichtlich Saugfähigkeit, Reißfestigkeit im nassen Zustand und Weichgriff gestellt.

Bei der Herstellung derartiger Tissuepapiere werden im Allgemeinen in einem vorbereitenden Schritt die Cellulosefasern zusammen mit den Hilfsstoffen in Mahlwerken verarbeitet. An den Mahlvorgang schließt sich heute eine überwiegend und in zunehmendem Maße kontinuierliche Stoffaufbereitung an, die in Stofflösern oder Pulpern, Refinern oder Kegelstoffmühlen durchgeführt wird, welche die Mikrostruktur der Fasern homogenisieren und diese fibrillieren. Der auf diese Weise erzeugte Faserbrei wird als "Stoff" bezeichnet. Die im Auflöseschritt zugegebenen Hilfsstoffe sind ausschlaggebend für die Qualität des Papiererzeugnisses. Im Falle von Tissueprodukten ist neben der für Papiererzeugnisse allgemein wichtigen Trockenfestigkeit meist die Nassfestigkeit von ausschlaggebender Bedeutung. Ein Papier ohne chemische Zusätze verliert seine Festigkeit nahezu vollständig, sobald es von Wasser penetriert wird. Die Bindungen zwischen den Fasern werden durch eingedrungene Wassermoleküle aufgehoben und das Papier läßt sich wieder leicht in seine Faserbestandteile zerlegen. Bei sehr vielen Tissueanwendungen ist es aber unabdingbar, dass das Erzeugnis auch im nassen Zustand eine hohe Reissfestigkeit behält. Dies kann durch hydrophobierende Zusätze, sog. Leimungsmittel, erreicht werden, die das Eindringen von Wasser verhindern sollen. Werden Leimungsmittel auf Paraffinwachsbasis verwendet, erhält das Erzeugnis zusätzlich einen weicheren Griff. Die festigkeitserhaltende Wirkung solcher Mittel ist jedoch eingeschränkt, der dennoch eintretende Festigkeitsverlust vielfach nicht akzeptabel. Durch chemische Vernetzung der Fasern kann dagegen eine wesentlich bessere Nassfestigkeit erreicht werden. Die gebräuchlichen Methoden können in vier Gruppen eingeteilt werden: a) Ausbildung eines die Fasern umschließenden polymeren Netzwerks aus Nassfestmittel, b) Verklebung der Fasern mittels eines wasserunlöslichen Bindemittels, c) Erhöhung der Bindungskräfte zwischen den Fasern und d) Schaffung von kovalenten Bindungen zwischen den Faseroberflächen. Die wirtschaftlich am bedeutendsten Nassfestmittel gehören zur erstgenannten Gruppe, am gebräuchlichsten sind wärmereaktive synthetische Harze, z.B. Harnstoff-Formaldehyd-Harze, Melamin-Formaldehyd-Harze oder Polyamid-Polyamin-Epichlorhydrinharze. Der entscheidende Nachteil der heute eingesetzten Harze aus Sicht der Verbraucher ist der harte Griff der damit hergestellten Tissuepapierprodukte, was insbesondere bei Anwendung auf empfindlichen Hautpartien zum Tragen kommt und ein wesentlicher Nachteil für den Einsatz solcher Produkte ist. Deshalb werden solche Produkte mit Weichmachern versehen, welche das Gefühl auf der Haut vorteilhaft beeinflussen sollen, ohne die sonstigen Eigenschaften der Produkte nachteilig zu beeinflussen.

Eine unverzichtbare Eigenschaft z. B. von Servietten, Papiertaschentüchern, Papierhandtüchern, Haushaltstüchern ist deren Saugfähigkeit gegenüber Wasser oder wäßrigen Substanzen. Die heute eingesetzten Weichmacher verschlechtern aber vielfach gerade diese Eigenschaft in nicht akzeptabler Weise oder lassen in ihrem weichmachenden Effekt zu wünschen übrig.

Der fertige Stoff gelangt nach dem Passieren von Reinigungsstationen (Sand- und Knotenfängern) über ein Stoffauflauf-System in einer Verdünnung von ca. 99 % Wasser und ca. 1 % Fasermaterial auf das Sieb der Papiermaschine. Mit dem Auflaufen der Faseraufschwemmung auf die Siebpartie der Papiermaschine beginnt der Vorgang der Blattbildung. Die Siebpartie besteht aus einem endlosen, in ständiger Bewegung befindlichen Sieb aus feinen Bronze- oder Kunststoffdrähten, das durch eine größere Zahl von sogenannten Registerwalzen getragen wird. In diesem Stadium fließt bereits ein wesentlicher Teil des Wassers durch das Sieb ab, ein anderer wird von unten durch die Siebkästen geleitet, so daß sich gegen Ende das Siebes eine blattförmige, jedoch noch feuchte Bahn bildet, deren Festigkeit sich in nachfolgenden Pressvorgängen erhöht. Die restliche Feuchtigkeit entzieht man der Papierbahn auf der "Trockenpartie". Dieser Teil der Papiermaschine besteht aus einer Anzahl mit Dampf erhitzter Hohlzylinder, über welche die Papierbahn mit Hilfe von Trockenfilzen geführt wird. Nach der Trocknung wird das Tissuepapier gekreppt und gegebenenfalls die Zahl der Papierlagen zur Erzeugung mehrlagiger Produkte erhöht und auf Hülsen zu Mutterrollen aufgewickelt. Während oder nach dem Papierherstellungsprozeß kann das Tissuepapier mit Additiven, Hilfsstoffen und Weichmachern behandelt werden, um die durch die oben erwähnten Präparationen zur Erhöhung der Naßfestigkeit erzeugten Nachteile auszugleichen. Der nachträgliche Auftrag von Additiven und Weichmachern kann zu diesem Zeitpunkt durch verschiedene Verfahren, z.B. Walzen oder Aufsprühen, erfolgen. Im Anschluß werden die Tissuepapiere geschnitten, gefaltet und verpackt.

Die Verbesserung des Griffs und der Weichheit von Tissuepapierprodukten sind ein Gegenstand kontinuierlicher Bemühungen. Ein vorrangiges Ziel ist die Verbesserung des Weichgriffs der Tissuepapiere bei gleicher oder verbesserter Naßreißfestigkeit. Dies gilt neben hoher Feuchtigkeitsaufnahme insbesondere für Küchentücher und Papiertaschentücher, während an Gesichts- und Kosmetiktücher höhere Anforderungen hinsichtlich der Weichheit gestellt werden. Toilettenpapiere sollen über gute Weichheit, aber auch große Reißfestigkeit sowohl im trockenen als auch im nassen Zustand verfügen.

Die Behandlung von Papiererzeugnissen mit chemischen Zusätzen oder Additiven erfolgt hauptsächlich entweder durch Zusatz der Additive zur Fasersuspension oder durch Auftrag der Additive nach der Blattbildung. Von besonderer Bedeutung bei der Auswahl der Additive und chemischen Zusätze ist, daß weichmachende Additive nicht die mechanischen Eigenschaften und insbesondere nicht die Reißfestigkeit im nassen Zustand negativ beeinflussen.

In der US-A-5 725 736 wird der Einsatz von kammförmig substituierten Siliconbetainen zur Verbesserung des Weichgriffs, damit hergestellte Papierprodukte und ein Verfahren zur Herstellung dieser Papierprodukte beschrieben. Zusammen mit den Siliconbetainen können eine Vielzahl weiterer Additive, z.B. verschiedene quaternierte Ammoniumverbindungen, Bisimidazolinverbindungen, diquaternäre Ammoniumverbindungen, Polyammoniumverbindungen, Phospholipide, quaternierte Proteine und Silicone, Polyethersiloxane und reaktive Siloxane, insbesondere Siloxane mit Aminogruppen, Carboxygruppen, Hydroxygruppen oder Epoxygruppen eingesetzt werden. Die mit diesen kammförmig substituierten Siliconbetainen hergestellten Papierprodukte sind insbesondere hinsichtlich der Oberflächenglätte und des Weichgriffs nicht ausreichend.

Die DE-A-198 58 616 beschreibt ein Tissuepapierprodukt auf Basis von Cellulosefasermaterial, das durch Behandlung mit einer wasserhaltigen oder wasserfreien Lotion aus einem Weichmacher ausgewählt aus der Gruppe der Mineralöle, Alkylethoxylate oder Fettsäureester, einer quaternierten Ammoniumverbindung und einem Polysiloxan hergestellt wurde. Als erfindungsgemäße Polysiloxane werden Polyethersiloxane und kammförmig substituierte Polydimethylsiloxane mit Betaingruppen in der Seitenkette beschrieben. Ein weiterer in der DE-A-198 58 616 offenbarter Gegenstand ist ein Verfahren zur Herstellung des Tissuepapierprodukts und dessen Anwendung. Der Zusatz der quaternierten Ammoniumverbindung dient vorrangig dem Fixieren der fetthaltigen Weichmacher und Polysiloxane auf der Faser, um die Durchdringung des Tissuepapierprodukts mit den Weichmachern und Polysiloxanen und somit einer Schwächung der mechanischen Eigenschaften entgegenzuwirken. Die nach diesem Verfahren hergestellten Tissuepapiere weisen eine zu geringe Weichheit und Bauschigkeit auf. Die Aufnahme von Feuchtigkeit ist gegenüber dem Rohpapier wesentlich verlangsamt.

Andererseits sind im Stand der Technik eine Vielzahl von Polysiloxanen aus einer Reihe anderer Anwendungen bekannt.

Zum Beispiel sind kationisch modifizierte Polydiorganosiloxane bereits seit längerer Zeit bekannt. Die US-A-3,389,160 beschreibt die Herstellung von kationisch modifizierten Polydiorganosiloxanen durch Addition von Dialkylaminen an seitenständige Epoxyalkylsiloxane mit nachfolgender Quaternierung durch Alkylhalogenide. Ein weiteres Verfahren zur Herstellung derartiger kationisch modifizierter Polydiorganosiloxane beschreibt die DE-A- 32 36 466. Die quaternierte Ammoniumgruppe wird hier durch Umsetzung eines 3-Chlorpropyl-Silans mit tertiären Aminen erhalten. Der Aufbau des Siliconpolymers erfolgt in einem zweiten Kondensationsschritt. Derartige Produkte sind jedoch nicht ausreichend für den Einsatz zur Behandlung von hydrophilen Papierprodukten geeignet. Der erreichbare Weichgriff ist nicht ausreichend. Weiterhin enthalten sie Halogenide als Anionen, und die DE-A-196 52 524 lehrt, daß eine vollständige Reaktion mit den teilweise giftigen, mutagen und/oder krebserregend wirkenden Alkylierungsmitteln nicht immer sichergestellt ist, so daß teilweise die Gefahr einer Verunreinigung der kationisch modifizierten Polydiorganosiloxane mit toxikologisch nicht akzeptablen Alkylhalogeniden besteht. Wenn die entsprechend der genannten Druckschriften hergestellten kationisch modifizierten Polydiorganosiloxane in Zusammensetzungen zur Behandlung von Tissuepapier eingesetzt werden, wird nur eine unbefriedigende Weichheit der Tissuepapierprodukte erreicht. Diese kationisch modifizierten Polydiorganosiloxane sind daher nicht zur Herstellung von Zusammensetzungen zur Behandlung von Tissuepapierprodukten geeignet.

Weitere Synthesewege werden in der US-A-4 384 130 und der US-A-4 511 727 beschrieben. Die Bindung der quaternierten Stickstoffgruppen erfolgt über Estergruppen. Die JP-A-10291967 beschreibt die Herstellung quaternierter Polyorganosiloxane durch Hydrosilylierung von α-Alkenylammoniumverbindungen mit wasserstoffhaltigen Siloxanen und die Verwendung der Produkte in Kosmetika, als Tenside, in Hilfsmitteln für textile Fasern und als Zusatz zu Reaktivharzen. Die Herstellung und Anwendung weiterer kationisch modifizierter Polydiorganosiloxane für den Einsatz in Textilhilfs- und in Haarbehandlungsmitteln werden in der WO-A-99/32539 beschrieben. Die in den genannten Druckschriften offenbarten Produkte sind jedoch nicht für den Einsatz in Zusammensetzungen zur Behandlung von hydrophilen Papierprodukten geeignet, da ihre Verwendung keinen ausreichenden Weichgriff ergibt und die Wasseraufnahmefähigkeit der ausgerüsteten Papierprodukte zu gering ist.

Die DE-A-37 19 086 beschreibt diquaternäre Polysiloxane, und die DE-A-37 05 121 offenbart polyquaternäre Polysiloxanpolymere sowie deren Verwendung in kosmetischen Zubereitungen, insbesondere in Zubereitungen zur Haarpflege. Die Herstellung der beschriebenen kationischen Polysiloxane erfolgt durch Addition von α,ω-Wasserstoffpolysiloxanen mit einem in 1-Stellung eine Kohlenstoff-Kohlenstoff-Doppelbindung tragenden Epoxid und der weiteren Umsetzung des in der ersten Stufe erhaltenen Epoxidgruppen aufweisenden Polysiloxans mit tertiären Aminen in Gegenwart einer Säure. Eine weitere Polysiloxan-Ammonium-Verbindung zur Verwendung in Haarwasch- und Haarbehandlungsmitteln zur Verbesserung der frisiertechnischen Eigenschaften wird in der DE-A-29 12 485 beschrieben.

Die DE-A-196 45 380 offenbart die Verwendung von derartigen Polysiloxanen in Zusammensetzungen für die Permanenthydrophilierung von Polyolefinfasern und die Verwendung der damit behandelten Fasern. In der DE-A-198 53 720 und der EP-A-0 811 051 wird die Verwendung von derartigen quatemierten Polysiloxanen in Reinigungsmitteln beschrieben. Die Erhöhung der Wirksamkeit von Geschirrspülmittelformulierungen für Geschirrspülmaschinen durch Zusatz von quaternierten Polysiloxanen im Klarspülschritt wird in der DE-A-199 44 416 offenbart. Weiterhin ist der Einsatz derartiger Verbindungen zu Waschmitteln für die Textilreinigung aus der US-A-5 514 302 bekannt.

Der vorliegenden Erfindung lag somit die Aufgabe zugrunde, Zusammensetzungen zu finden, die bei der Behandlung von Papierprodukten auf Cellulosebasis, insbesondere sogenannten Tissuepapierprodukten, ein besonders weiches, schnell Feuchtigkeit aufnehmendes, d.h. hydrophiles, und insbesondere im nassen Zustand über gute Eigenschaften verfügendes Tissuepapier ergeben. Diese Zusammensetzungen sollten leicht handhabbar und in jeder Phase des Herstellungsverfahrens der Papierprodukte einsetzbar sein, d.h. nicht nur die fertigen Papierprodukte, sondern auch die entsprechenden Ausgangsmaterialien und Zwischenprodukte sollten mit den Zusammensetzungen behandelbar sein.

Überraschend wurde gefunden, daß eine Zusammensetzung, enthaltend
A) 1 - 99,99 Gewichtsprozent mindestens eines kationisch modifizierten Diorganosiloxans oder Polydiorganosiloxans der Formeln 1a, 1b oder 1c 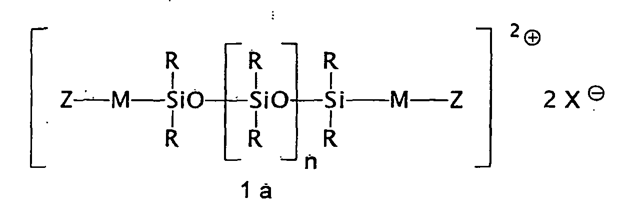 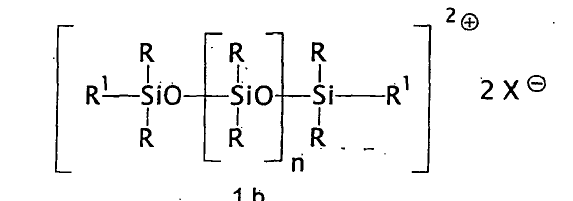 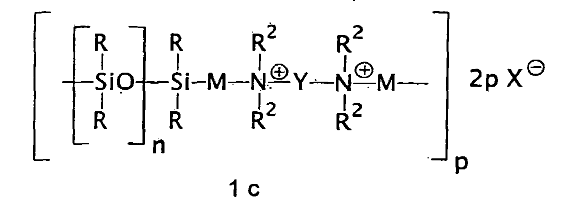 worin der Rest Z eine der folgenden Gruppen 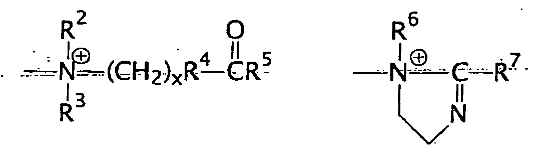 ist,
   die Reste R gleiche oder verschiedene Alkyl- oder Cycloalkylreste mit 1 bis 30 Kohlenstoffatomen, Alkenylreste mit 2 bis 30 Kohlenstoffatomen, Aryl- oder Alkylarylreste mit 6 bis 20 Kohlenstoffatomen, Polyoxyalkylengruppen der allgemeinen Formel -(CHR)_{q}-O-(CᵣH₂ᵣO)ₛ-R⁸ oder durch Halogenide substituierte Alkylreste mit 1 bis 30 Kohlenstoffatomen sind,
   der Rest R¹ 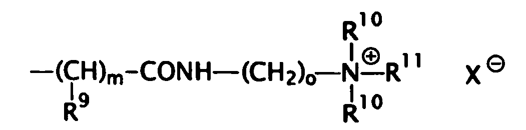 ist,
   die Reste R² und R³ gleiche oder verschiedene Alkylreste mit 1 bis 30 Kohlenstoffatomen, Alkenylreste mit 2 bis 30 Kohlenstoffatomen, Aryl-CH₂-Reste sind oder jeweils Bestandteil eines verbrückenden Alkylenrestes sind, wobei sowohl die Alkyl- als auch die Alkenylreste Hydroxylgruppen aufweisen können,
   der Rest R⁴ ein -O- oder -NR¹²-Rest ist, wobei R¹² ein Alkyl- oder Hydroxyalkylrest mit 1 bis 4 Kohlenstoffatomen oder ein Wasserstoffatom darstellt,
   die Reste R⁵, R⁶, R⁷ Alkylreste mit 1 bis 30 Kohlenstoffatomen oder Alkenylreste mit 2 bis 30 Kohlenstoffatomen sind, wobei sowohl die Alkyl- als auch die Alkenylreste Hydroxylgruppen aufweisen können,
   R⁸ ein Wasserstoff, ein Acetoxyrest oder ein Alkylrest mit 1 bis 4 Kohlenstoffatomen ist,
   R⁹ ein Wasserstoff oder Methylrest ist,
   R¹⁰ ein Alkyl-, Alkenyl- oder Hydroxyalkylrest mit 1-3 Kohlenstoffatomen ist,
   R¹¹ gleich R¹⁰ oder Aryl-CH₂- oder ein Allylrest ist,
   M ein zweiwertiger Kohlenwasserstoffrest mit mindestens 4 Kohlenstoffatomen ist, der eine Hydroxylgruppe aufweisen kann und in der Kohlenstoffatomkette ein Sauerstoffatom aufweisen kann,
   Y ein zweiwertiger Kohlenwasserstoffrest mit mindestens 2 Kohlenstoffatomen ist, der eine Hydroxylgruppe aufweisen und in der Kohlenstoffkette ein Sauerstoff- oder Stickstoffatom aufweisen kann,
   n eine Zahl von 0 bis 200, wobei n in Formel 1 c mindestens 1 beträgt,
   m eine Zahl von 2 bis 10,
   p eine Zahl ≥ 1,
   x eine Zahl von 2 bis 4,
   o eine Zahl von 2 bis 4,
   q eine Zahl von 3 bis 8,
   r eine Zahl von 2 bis 4,
   s eine Zahl von 0 bis 100, und
   X⁻ ein organisches oder anorganisches Anion ist,
B) 0,01 bis 79 Gewichtsprozent einer quaternären Ammoniumverbindung der Formel [(R¹³)ₐ(R¹⁴)_{b}(R¹⁵)_{c}N]⁺ X⁻ worin
   R¹³ ein Alkyl-, Hydroxyalkylrest mit 1 bis 8 Kohlenstoffatomen, oder ein ethoxylierter Hydroxyalkylrest mit insgesamt 2 bis 30 Kohlenstoffatomen,
   R¹⁴ ein gesättigter oder ungesättigter Kohlenwasserstoffrest mit 1 bis 30 Kohlenstoffatomen,
   R¹⁵ ein Rest der Formel -(CH₂)ₘ-R⁴-C(O)-R¹⁶,
   R¹⁶ ein gesättigter oder ungesättigter Kohlenwasserstoffrest mit 1 bis 24 Kohlenstoffatomen,
   a eine ganze Zahl von 2 oder 3,
   b eine ganze Zahl von 0 bis 2,
   c eine ganze Zahl von 0 bis 2,
wobei die Summe a + b + c = 4,
die Summe b + c = 1 oder 2
und m, R⁴ und X⁻ die oben genannten Bedeutungen haben,
die obigen Aufgaben löst.

Gegenstand der vorliegenden Erfindung ist somit ferner ein Verfahren zur Herstellung eines hydrophilen Papierprodukts enthaltend, bezogen auf das Fasertrockengewicht, mind. 50 % Cellulosefasern und höchstens 50 % Celluloseregenerat- oder Synthesefasern, die dadurch gekennzeichnet ist, daß die Fasern mit 0,1 bis 1 Gew-.%, bezogen auf das Fasertrockengewicht, einer erfindungsgemäßen Zusammensetzung behandelt werden.

Gegenstand der vorliegenden Erfindung ist auch die Verwendung der erfindungsgemäßen Zusammensetzung zur Behandlung von einem Tissuepapierprodukt enthaltend, bezogen auf das Fasertrockengewicht, mind. 50 % Cellulosefasern und höchstens 50 % Celluloseregenerat- oder Synthesefasern oder zur Behandlung des entsprechenden Ausgangsmaterials oder der Zwischenprodukte des Papierprodukts.

Schließlich ist Gegenstand der vorliegenden Erfindung ein hydrophiles Papierprodukt enthaltend, bezogen auf das Trockenfasergewicht, mind. 50 % Cellulosefasern und höchstens 50 % Celluloseregenerat- oder Synthesefasern, das dadurch gekennzeichnet ist, daß es eine erfindungsgemäße Zusammensetzung enthält oder mit dieser behandelt worden ist, jeweils in einer Menge von 0,1 bis 1 Gew.-%, bezogen auf das Trockenfasergewicht.

Bevorzugte Ausführungsformen der Erfindung ergeben sich aus den abhängigen Patentansprüchen.

Hydrophiles Papierprodukt im Sinne der vorliegenden Erfindung ist ein auf Basis von Cellulosefasern hergestelltes Produkt, das zur Aufnahme von Flüssigkeit geeignet ist, und das neben den Cellulosefasern wie oben definiert auch Celluloseregenerat- oder Synthesefasern enthalten kann. D.h. das erfindungsgemäße Papierprodukt umfasst auch solche Papierprodukte, die nicht nur, bezogen auf den Faserbestandteil, aus nativen Zellstoffen bestehen. Das Papierprodukt wird hier auch als Tissuepapier oder Tissuepapierprodukt bezeichnet. Je nach Zusammenhang kann es auch ein Zwischenprodukt bei der Herstellung des Papierprodukts bedeuten.

Ein erfindungsgemäß besonders bevorzugtes Papierprodukt besteht zu mindestens 90 Gew.-% aus Cellulose, insbesondere aus reiner, nativer Cellulose.

Überraschend hat sich also gezeigt, daß die in der DE-A-37 19 086 beschriebenen diquaternären Polysiloxane, die in der DE-A-37 05 121 beschriebenen polyquaternären Polysiloxanpolymere und die in DE-A-29 12 485 beschriebenen Polysiloxan-Ammonium-Verbindungen als Polydiorganosiloxanbestandteile einer Zusammensetzung zur Behandlung und Verbesserung der Eigenschaften von Papierprodukten, insbesondere zur Herstellung von Tissuepapierprodukten mit hervorragendem Weichgriff, die in ihrer Wasseraufnahmefähigkeit nicht beeinträchtigt sind, d.h. sehr gute Nassfesteigenschaften aufweisen, geeignet sind.

Ein wesentlicher Bestandteil der erfindungsgemäßen Zusammensetzungen sind kationisch modifizierte Diorganosiloxane oder Polydiorganosiloxane. Erfindungsgemäße kationisch modifizierte Diorganosiloxane oder Polydiorganosiloxane wirken als Weichmacher auf den Cellulosefasern, fixieren sich mit ihren quaternären N-Atomen und erlauben die Herstellung besonders weicher, bauschiger und in den mechanischen Eigenschaften nicht beeinträchtigter Tissuepapierprodukte.

Geeignet zum Einsatz in Komponente A) der Zusammensetzungen zur Herstellung und Behandlung der erfindungsgemäßen Tissuepapierprodukte aus Cellulosefasern sind kationisch modifizierte Diorganosiloxane oder Polydiorganosiloxane der Formeln 1a, 1b und 1c

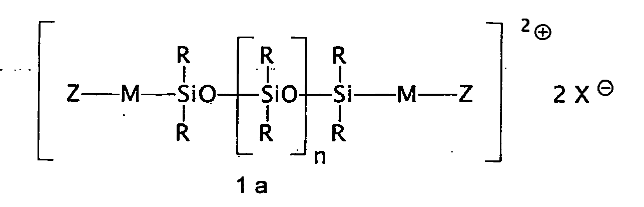

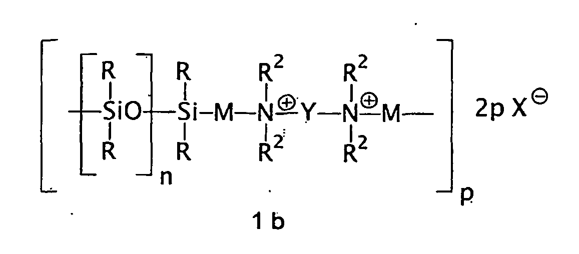

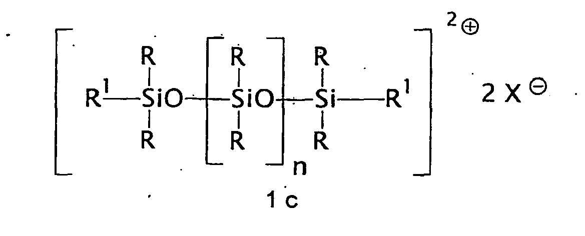

in denen die Reste und Zähler die oben angegebene Bedeutung tragen, sowie Mischungen dieser Diorganosiloxane oder Polydiorganosiloxane, z.B. eine Mischung aus einem Diorganosiloxane oder Polydiorganosiloxan der Formel 1 a mit einem der Formel 1 b oder 1 c, oder eine Mischung aus einem Diorganosiloxane oder Polydiorganosiloxan der Formel 1 b mit einem der Formel 1 c oder eine Mischung von allen drei Diorganosiloxane oder Polydiorganosiloxanen der Formeln 1 a, 1 bund 1 c.

Besonders geeignet zum Einsatz in Komponente A) der erfindungsgemäßen Zusammensetzungen zur Herstellung oder Behandlung von Tissuepapierprodukten auf Cellulosefaserbasis sind kationisch modifizierte Polydiorganosiloxane der Formel 1 a und 1 c in denen n eine Zahl von 10 bis 100 und R⁵, R⁶ und R⁷ Alkyl- oder Alkenylreste mit 8 bis 22 Kohlenstoffatomen sind und die weiteren Reste und Zähler die oben angegebene Bedeutung haben.

Weitere bevorzugte Verbindungen zum Einsatz in Komponente A) der erfindungsgemäßen Zusammensetzungen zur Herstellung der Tissuepapierprodukte aus Cellulosefasern sind kationisch modifizierte Polydiorganosiloxane der Formel 1 a, in denen M ein zweiwertiger Rest ist, ausgewählt aus der Gruppe 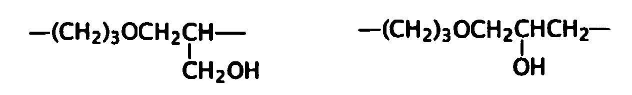 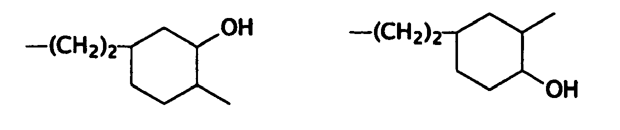 und Z ein Rest ausgewählt aus einer der folgenden Gruppen 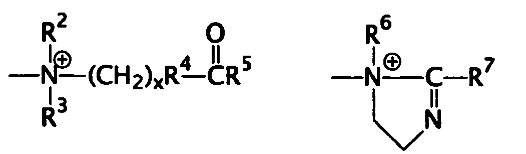 ist,
die Reste R, R², R³ Methylgruppen sind,
der Rest R⁴ ein Rest -NR¹²- ist, wobei R¹² einer Alkylgruppe mit 1 bis 4 Kohlenstoffatomen, z.B. einem Methyl-, Ethyl-, Propyl-, Isopropyl-, n-Butyl- oder Isobutylrest, oder einem Wasserstoffatom entspricht,
der Rest R⁶ ein Alkylrest mit 1 bis 20 Kohlenstoffatomen ist, z.B. ein Methylrest, ein Decyl- oder Octadecylrest,
die Reste R⁵ und R⁷ Alkylreste mit 8 bis 20 Kohlenstoffatomen sind, z.B. Octyl-, 2-Ethylhexyl- , Decyl-, Hexadecyl- oder Octadecylreste,
x = 2 bis 4,
n = 6 bis 100 sind, und
X⁻ ein Acetation ist.

Derartige kationisch modifizierte Polydiorganosiloxane sind dem Fachmann bekannt und kommerziell erhältlich.

Ein weiterer wesentlicher Bestandteil (Komponente B) der erfindungsgemäßen Zusammensetzungen und der hydrophilen Papierprodukte hergestellt aus Cellulosefasern und der erfindungsgemäßen wasserhaltigen oder wasserfreien Zusammensetzung sind quaternäre Ammoniumverbindungen der allgemeinen Formel [(R¹³)ₐ(R¹⁴)_{b}(R¹⁵)_{c}N]⁺ X⁻.

R¹³ kann dabei ein Alkyl- oder Hydroxyalkylrest mit 1 bis 8 Kohlenstoffatomen oder ein ethoxylierter Hydroxyalkylrest mit insgesamt 2 bis 30 Kohlenstoffatomen, sein, z.B. ein Methylrest, Ethylrest, Propylrest, Isopropylrest, Butyl- oder Octylrest, aber z.B. auch ein Rest der Bedeutung -CH₂CH₂OH, -CH₂CH₂CH₂OH, -CH₂CH(OH)CH₃, -CH₂CH₂OCH₂CH₂OH oder -CH₂CH₂(OCH₂CH₂)₃OH. Bevorzugt ist R¹³ ein Methylrest, ein Hydroxyethylrest oder ein ethoxylierter Hydroxyethylrest. R¹⁴ ist ein ungesättigter oder gesättigter Kohlenwasserstoffrest mit 1 bis 30, insbesondere 4 bis 24, vorzugsweise 6 bis 22 Kohlenstoffatomen, z.B. ein Decyl-, Hexadecyl- oder Octadecylreste, oder ein Oleylrest. Beim Rest R¹⁵ handelt es sich um eine Ester- oder Carbonsäureamidgruppe der allgemeinen Formel -(CH₂)ₘ-R⁴-C(O)-R¹⁶, wobei der Rest R¹⁶ ein gesättigter oder ungesättigter Kohlenwasserstoffrest mit 1 bis 24 Kohlenstoffatomen, bevorzugt mit 6 bis 22, insbesondere 8 bis 18 Kohlenstoffatomen darstellt, R⁴ ein Sauerstoffatom oder, bevorzugt, eine Gruppe -NR¹² ist, wobei R¹² ein Alkyl- oder Hydroxyalkylrest mit 1 bis 4 Kohlenstoffatomen oder ein Wasserstoffatom darstellt und m eine ganze Zahl von 2 bis 10 ist und bevorzugt einen Wert von 2 oder 3 annimmt. Es können ebenfalls Kombinationen verschiedener quaternärer Ammoniumverbindungen eingesetzt werden.

Die erfindungsgemäßen quaternären Ammoniumverbindungen können auch aus natürlichen Quellen abgeleitet sein, z.B. aus Talg (Tallow) oder Kokosfett. Bevorzugte Reste R¹⁴ sind somit auch die Kohlenwasserstoffanteile der verschiedenen Fettsäurenkomponenten aus diesen Materialien. Somit können die Reste R¹⁴ und/oder R¹⁶ z.B. die Kohlenwasserstoffreste von in Kokosfett oder Talg vorkommenden gesättigten Fettsäuren sein, wie Hexyl, Octyl, Decyl, Lauryl (Dodecyl), Myristyl (Tetradecanyl), Pentadecanyl, Palmityl (Hexadecanyl), Heptadecanyl, Stearyl (Octadecanyl), Behenyl (Docosanoyl), sowie die einfach, zweifach oder dreifach ungesättigten Kohlenwasserstoffreste der in Talg oder Kokosfett vorkommenden Fettsäurekomponenten, z.B. die Kohlenwasserstoffreste von Palmitoleinsäure, Ölsäure, Linolsäure oder Linolensäure. Eine Ausführungsform einer erfindungsgemäßen quaternären Ammoniumverbindung kann somit ein Gemisch von quaternären Ammoniumverbindungen sein, bei dem die Reste R¹⁴ und/oder R¹⁶ der einzelnen quaternären Ammoniumverbindungen den Kohlenwasserstoffresten der Fettsäurekomponenten von Kokosfett entsprechen.

Beispiele für erfindungsgemäße quaternäre Ammoniumverbindungen, die sich gut zur Verwendung in den erfindungsgemäßen Zusammensetzungen bzw. hydrophilen Papierprodukten eignen, sind Dialkyldimethylammoniumverbindungen, wie z.B. Dimethylditallowammoniumchlorid, Dimethylditallowammoniumacetat, Dimethylditallowammoniummethylsulfat, Dimethyl-diisotridecylammoniumchlorid, Dikokosdimethylammoniumchlorid, Dimethyldistearylammoniumchlorid, Mischungen aus Oleyltrimethyl- und Dikokosdimethylammoniumchlorid bzw. Tallowtrimethyl- und Dikokosdimethylammoniumchlorid. Weitere Beispiele für derartige quaternäre Ammoniumverbindungen sind Bis(acylamidoalkyl)polyethoxyalkyl-ammoniummethylsulfate, -chloride und -acetate, quaterniertes Talgfettimidazoliniummethylsulfat und N-Methyltriethanolammoniumfettsäurediestermethylsulfat. Derartige quaternäre Ammoniumverbindungen sind dem Fachmann in sehr großer Anzahl bekannt und kommerziell erhältlich.

Bevorzugt beträgt die Menge der Komponente A) in den Zusammensetzungen von 20 bis 90. Gew.-%, insbesondere 25 bis 75 Gew.-% oder 30 bis 50 Gew.-%, jeweils bezogen auf die gesamte Zusammensetzung.

Bevorzugt beträgt die Menge der Komponente B) in den Zusammensetzungen von 5 bis 79 Gew.-%, insbesondere 25 bis 75 Gew.-% oder 50 bis 70. Gew.-%, jeweils bezogen auf die gesamte Zusammensetzung.

Weiterhin können die erfindungsgemäßen Zusammensetzungen bezogen auf die gesamte Zusammensetzung bis zu 20 Gewichtsprozent Wachs mit einem Schmelzpunkt von ≥ 35°C ausgewählt aus Carnaubawachs, Palmwachs, Bienenwachs, Wollwachs, Paraffin, Polyethylenwachs oder Mischungen derselben enthalten. Vorzugsweise beträgt die Menge an Wachs in den Zusammensetzungen von 2 bis 16 Gew.-%, insbesondere 4 bis 14 Gew.-% oder 5 bis 10 Gew.-%, jeweils bezogen auf die gesamte Zusammensetzung.

Eine bevorzugte Zusammensetzung enthält von 30 bis 50 Gew.-% der Komponente A), von 40 bis 70 Gew.-% der Komponente B) und von 2 bis 10 Gew.-% Wachs.

Es kann sich bei den Wachsen sowohl um Ester höherer Fettsäuren mit höheren primären Alkoholen, als auch um synthetische oder mineralische Wachse handeln, die einen Schmelzpunkt von 35°C oder darüber aufweisen. Beispiele für geeignete Wachse sind Carnaubawachs, Palmwachs, Bienenwachs, Wollwachs, Paraffin, Polyethylenwachs oder Mischungen derselben.

Zur Herstellung der erfindungsgemäßen Zusammensetzungen können sowohl die Wachse selbst als auch bereits emulgierte bzw. dispergierte Wachse verwendet werden. Zum Beispiel können Polyethylenwachsdispersionen, die in den Druckschriften DE-A-23 59 966 und DE-A-28 24 716 beschrieben werden, verwendet werden. Bei derartigen Dispersionen handelt es sich meist um dispergiertes Polyethylen mit funktionellen Gruppen, insbesondere -COOH-Gruppen, die durch Copolymerisation von Ethylen mit zum Beispiel Acrylsäure, aber auch durch partielle Oxidation des Polyethylens in das Polymer eingeführt werden können. Derartige Wachsdispersionen können zum Erreichen von Stabilität weiterhin unterschiedliche kationische, nichtionogene, anionische oder amphotere Emulgatoren und weitere Hilfsstoffe enthalten. Zum Einsatz in den erfindungsgemäßen Zusammensetzungen werden Wachsdispersionen mit bevorzugt kationischen Emulgatoren oder Mischungen von kationischen und nichtionischen Emulgatoren eingesetzt. Derartige Wachse und emulgierte bzw. dispergierte Wachse sind dem Fachmann bekannt und kommerziell erhältlich.

Zusätzlich kann die erfindungsgemäße Zusammensetzung einen oder mehrere mehrwertige Alkohole enthalten. Dieser mehrwertige Alkohol kann ein Molekulargewicht von 50 bis ca. 2000 g/mol aufweisen und verfügt über mindestens 2 primäre, sekundäre oder tertiäre Hydroxygruppen. Derartige zum erfindungsgemäßen Einsatz geeignete mehrwertige Alkohole sind dem Fachmann bekannt und in großer Anzahl kommerziell erhältlich. Vorzugsweise kann die erfindungsgemäße Zusammensetzung die mehrwertigen Alkohole Glyzerin, Ethylenglycol, Polyethylenglycol, Polypropylenglycol, Polyethylenpolypropylenmischpolymerisate mit statistischer oder blockartiger Verteilung, Dipropylenglycol, Butyldiglycol, 1,3-Propandiol, Pentaerythrit und besonders bevorzugt 1,2-Propandiol und Dipropylenglycol enthalten. Derartige mehrwertige Alkohole sind dem Fachmann bekannt und kommerziell erhältlich.

Die erfindungsgemäße Zusammensetzung zur Herstellung von Tissuepapierprodukten ist bei Raumtemperatur flüssig und kann außer den genannten Bestandteilen eine Reihe weiterer Bestandteile enthalten, insbesondere Bakterizide, Fungizide, Deodorantien, Antioxidantien, Pflegezusätze, rheologische Zusätze, Emulgatoren und Stabilisatoren.

Den erfindungsgemäßen Zusammensetzungen zur Herstellung von Tissuepapierprodukten können Bakterizide zugesetzt werden. Bei den Bakteriziden zum Einsatz in den erfindungsgemäßen Zusammensetzungen kann es sich sowohl um bakterientoxische als auch um bakteriostatische, d.h. die Vermehrung von Bakterien behindernde Substanzen handeln. Der Zusatz kann dabei sowohl dem Schutz der erfindungsgemäßen Zusammensetzungen zur Herstellung von Tissuepapierprodukten vor dem Befall von Bakterien als auch dem gezielten Schutz des Tissuepapierprodukts vor Bakterienbefall nach dessen Herstellung dienen. Beispiele für derartige Bakterizide oder Konservierungsmittel sind bestimmte quaternäre Ammoniumverbindungen, Formaldehyd bzw. Formaldehyddepotstoffe, N-Methylisothiazolinon, 5-Chlor-N-methylisothiazolinon, 1,2-Benzisothialzolin-3-on und dessen Salze. Derartige bakterizid wirkende Bestandteile sind dem Fachmann bekannt und kommerziell erhältlich.

Weiterhin können die erfindungsgemäßen Zusammensetzungen Fungizide enthalten. Fungizide sind biologisch aktive Verbindungen zur Bekämpfung von Pilzen. Derartige Additive sind dem Fachmann bekannt und kommerziell erhältlich.

Deodorantien oder Parfümöle können den erfindungsgemäßen Zusammensetzungen zugesetzt werden, um die damit hergestellten Tissuepapierprodukte mit einem angenehmen Geruch zu versetzen. Insbesondere sind Kombinationen aus sogenannten Wirtsmolekülen und den geruchsverbessernden Substanzen vorteilhaft, die ihre Wirkung erst bei der Anwendung entfalten. Beispiele für derartige geruchsverbessernde Substanzen sind dem Fachmann bekannt und in einer sehr großen Zahl von Varianten kommerziell verfügbar. Ein Beispiel für Wirtsmoleküle, die sowohl geruchsverbessernde Substanzen gezielt freisetzen als auch unangenehm riechende Stoffe binden können sind Cyclodextrine. Derartige Cyclodextrine und andere als Wirtsmoleküle brauchbare Verbindungen sind dem Fachmann bekannt und kommerziell erhältlich.

Ferner können den erfindungsgemäßen Zusammensetzungen zur Herstellung von Tissuepapierprodukten Antioxidantien zugesetzt werden. Als Antioxidantien bezeichnet man chemische Substanzen, die die qualitätsmindernde Oxidation leicht oxidierbarer Stoffe verhindern. Beispiele von Antioxidantien sind Tocopherol und seine Derivate und 2,6-Di-tert-butyl-4-methylphenol. Weitere antioxidativ wirkende Substanzen sind dem Fachmann bekannt. Zum Einsatz in erfindungsgemäße Zusammensetzungen zur Herstellung von Tissuepapierprodukten geeignete Antioxidantien sind kommerziell erhältlich.

Den erfindungsgemäßen Zusammensetzungen zur Herstellung von hydrophilen Tissuepapierprodukten können weiterhin Pflegezusätze zugefügt werden. Derartige Pflegezusätze haben die Aufgabe bei der Verwendung des Tissuepapiers eine heilende, lindernde oder pflegende Wirkung auf der Haut oder auf Schleimhäuten zu erzeugen, die mit dem Tissuepapier mittelbar oder unmittelbar in Berührung kommen. Derartige Pflegezusätze sind dem Fachmann im Prinzip bekannt. Eine heilende, lindernde oder pflegende Wirkung kann zum Beispiel bei der Verwendung des Tissuepapierprodukts als Taschentuch in der Beruhigung der Nasenschleimhaut durch bestimmte etherische Öle oder andere Substanzen bestehen. Beispiele für derartige Pflegezusätze sind Eukalyptusöl, Bisabolol und Menthol. Weitere in der beschriebenen Richtung wirkende Pflegesubstanzen sind dem Fachmann bekannt und kommerziell erhältlich. Eine Reihe anderer Pflegezusätze mit dem Ziel der Vermeidung oder Verminderung von entzündlichen Reaktionen der Haut oder der allgemeinen Hautpflege bzw. Feuchtigkeitsregulierung der Haut können ebenfalls der erfindungsgemäßen Zusammensetzung zur Herstellung von hydrophilen Tissuepapierprodukten zugesetzt werden. Derartige Pflegezusätze können Vitamine, wie zum Beispiel Tocopherol oder Retinol und deren Derivate, Pantothensäure oder Dexpanthenol sein. Geeignet zum Einsatz als Pflegezusätze sind ebenfalls bestimmte Fettsäurederivate wie zum Beispiel Lanolin. Es können aber ebenso eine Reihe weiterer Öle oder feuchtigkeitsregulierender Zusätze, wie z.B. Vaseline oder Polydimethylsiloxane verwendet werden. Weitere Beispiele für derartige Pflegezusätze sind dem Fachmann insbesondere aus der Produktion von Salben, pharmazeutischen Erzeugnissen und Kosmetika bekannt. Weitere heilende, lindernde oder pflegende Zusätze zum Einsatz in den erfindungsgemäßen Zusammensetzungen zur Herstellung von hydrophilen Tissuepapierprodukten können Proteine, Enzyme oder deren Derivate sein, z.B. Proteinhydrolysate. Derartige Proteine können sowohl natürlichen Ursprungs sein als auch durch chemische oder biochemische Verfahren gewonnen oder modifiziert bzw. derivatisiert werden.

Zur Erzielung einer gewünschten Viskosität oder anderer rheologischer Eigenschaften können der erfindungsgemäßen Zusammensetzung zur Herstellung von hydrophilen Tissuepapierprodukten rheologische Zusätze, auch Verdickungsmittel genannt, zugesetzt werden. Geeignete rheologische Additive zum Einsatz in den erfindungsgemäßen Zusammensetzungen können organisch modifizierte Schichtsilicate, z.B. organisch modifizierter Bentonit, Polyacrylate, Methylcellulose und andere Cellulosederivate, Rhizinusölderivate, Polyurethan-Polyharnstoff-Polyether-Copolymere und eine Reihe weiterer Substanzen sein, die dem Fachmann bekannt und kommerziell erhältlich sind.

Im Fall der Herstellung der erfindungsgemäßen Zusammensetzung in Form einer wäßrigen Emulsion, gegebenenfalls aber auch zur Herstellung von wasserfreien Formulierungen, kann man zweckmäßig zur Bildung und Stabilisierung der erfindungsgemäßen Zusammensetzung an sich bekannte Emulgatoren verwenden. Für diesen Zweck eignen sich insbesondere kationenaktive Emulgatoren, z.B. Didecyldimethylammoniumchlorid, Dioctadecyldimethylammoniumchlorid sowie deren entsprechende Hydroxide, aber auch verschiedene Imidazoliniumverbindungen. Weiterhin sind Betaine als Emulgatoren geeignet, z.B. Fettsäureamidoalkylbetain, Kokosamidopropylbetain, sowie Mischungen von Betainen bzw. kationenaktiven Emulgatoren mit nichtionogenen Verbindungen, beziehungsweise ausschließlich nichtionogene oder Mischungen verschiedener nichtionogener Emulgatoren. Nichtionogene Emulgatoren können durch Anlagerung von Ethylenoxid und anderen Alkylenoxiden an Verbindungen mit acidem Wasserstoff, aber auch durch eine Reihe weiterer Verfahren erhalten werden. Eine große Anzahl solcher nichtionogener Emulgatoren sind für den Einsatz in den erfindungsgemäßen Zusammensetzungen geeignet. Insbesondere geeignet sind Fettsäurepartialester von mono- oder polyfunktionellen Alkoholen mit 1 bis 12 Kohlenstoffatomen im Alkohol. Beispiele für derartige polyfunktionelle Alkohole sind Ethylenglykol, Glycerol, Xylitol, Sorbitol, Sorbitan und Pentaerythritol. Der Fettsäureesterteil dieser nichtionogenen Emulgatoren besteht zumeist aus 12 bis 22 Kohlenstoffatomen und kann z.B. ein Lauryl-, ein Oleyl-, ein Stearyl- oder ein Myristylrest sein. Derartige Fettsäurepartialester von polyfunktionellen Alkoholen können weiterhin mit Alkylenoxiden, wie z.B. Ethylenoxid, umgesetzt werden. Beispiel für derartige nichtionogene Emulgatoren sind ethoxyliertes Sorbitanstearat oder ethoxyliertes Sorbitanoleat. Auch derartige nichtionogene Emulgatoren sind zum Einsatz in den erfindungsgemäßen Zusammensetzungen geeignet. Weiterhin können auch Anlagerungsprodukte von Alkylenoxiden an aliphatische, geradkettige oder verzweigte Alkohole mit 6 bis 22 C-Atomen, z.B. Isotridecylethoxylat, oder an alkylierte Phenole, z.B. Nonylphenolethoxylate, verwendet werden. Desweiteren können alkoxylierte Fettamine als nichtionogene Emulgatoren in den erfindungsgemäßen Zusammensetzungen Verwendung finden. Gut geeignet zur Verwendung als Emulgatoren sind auch hydrophil modifizierte Organopolysiloxane, z.B. Organopolysiloxane in denen 1-35% der Siliciumatome mit seitenständigen Polyethergruppen, die 2-50, und vorzugsweise 6-35 angelagertes Ethylenoxid und/oder Propylenoxid in statistischer oder blockartiger Verteilung enthalten. Die weiteren an Si-Atome gebundenen Substituenten in derartigen Organopolysiloxanen können aus einer oder mehreren Alkylgruppen mit 1-20 Kohlenstoffatomen oder Alkenylgruppen mit 2-20 Kohlenstoffatomen bestehen. Weitere geeignete nichtionogene Emulgatoren sind Alkylpolyglucoside. Zum Einsatz in den erfindungsgemäßen Zusammensetzungen sind weiterhin anionische Tenside geeignet, z.B. Alkyl- oder Arylpolyalkylenglycolethercarbonsäuren, Alkyl- oder Arylpolyalkylenglycolethersulfate, Alkylbenzolsulfonate, Alkylbenzolsulfonsäuren, Aminsalze von Carbonsäuren, Fettalkoholpolyalkylenglycolethercarboxylate und -sulfate, Fettalkoholsulfate, Paraffinsulfonate, Phosphorsäureester, Rizinusölsulfonate und Sulfosuccinate. Besonders geeignet zum Einsatz in den erfindungsgemäßen Zusammensetzungen sind kationische und nichtionische Emulgatoren und Mischungen von kationischen und nichtionischen Emulgatoren. Derartige Emulgatoren sind dem Fachmann bekannt und kommerziell erhältlich.

Als weitere Bestandteile kann die erfindungsgemäße Zusammensetzung weitere lineare, cyclische oder verzweigte Organopolysiloxane, z.B. Dimethylpolysiloxane, α,ω-Dimethylpolysiloxanediole, Decamethylcyclopentasiloxan, verschiedene Siliconharze mit am Si-Atom gebundenen Methyl- und/oder Phenylgruppen, aber auch mit z.B. Amino-, Amido-, Carboxy-, Polyether-, Epoxy-, Alkylgruppen substituierte lineare, cyclische oder verzweigte Siloxane enthalten. Derartige Organopolysiloxane sind dem Fachmann bekannt und kommerziell erhältlich.

Die erfindungsgemäße Zusammensetzung zur Herstellung von hydrophilen Tissuepapierprodukten kann durch Mischen der einzelnen Bestandteile in geeigneter Reihenfolge hergestellt werden. Die Bestandteile werden dazu gegebenenfalls zuvor aufgeschmolzen und dann nacheinander oder gleichzeitig dosiert und vermischt. Das Aufschmelzen bestimmter Bestandteile kann auch durch Zugabe zu allen oder einem Teil der flüssigen Komponenten der erfindungsgemäßen Zusammensetzung und dem Erwärmen dieser flüssigen Komponenten erfolgen. Die Reihenfolge der Zugabe der Bestandteile der erfindungsgemäßen Zusammensetzung ist nicht kritisch für die Anwendung und sollte in einer Art und Weise erfolgen, die es erlaubt, stabile Zusammensetzungen insbesondere im Hinblick auf die Lager- und Temperaturbeständigkeit zu erhalten. Die Herstellung der erfindungsgemäßen Zusammensetzungen kann dabei in einer Reihe von Rührreaktoren, als auch in Kolloidmühlen, Mischern verschiedener Bauart, z.B. nach dem sogenannten Rotor-Stator-Prinzip, aber auch durch Hochdruckhomogenisierung und andere Verfahren erfolgen. Die Herstellung der erfindungsgemäßen Zusammensetzung kann dabei sowohl mit diskontinuierlich, als auch mit kontinuierlich arbeitenden Anlagen erfolgen. Zur Herstellung der erfindungsgemäßen Zusammensetzung geeignete Geräte und Apparaturen sind dem Fachmann bekannt.

Zur Herstellung von wasserfreien Zusammensetzungen verwendet man vorteilhaft einen mehrwertigen Alkohol als Lösungsvermittler und Verdünnungsmedium. Zur Herstellung wäßriger Zusammensetzungen können gegebenenfalls Emulgatoren und weiterhin gegebenenfalls Verdickungsmittel zum Erreichen einer gleichmäßigeren, feinteiligeren und stabileren Formulierung verwendet werden. Der Zusatz von weiteren Additiven, wie z.B. Bioziden, Fungiziden, Antioxidantien und Pflegezusätzen kann sowohl in wäßrigen als auch in wasserfreien erfindungsgemäßen Zusammensetzungen erfolgen.

Die erfindungsgemäßen Zusammensetzungen können an verschiedenen Punkten des oben beschriebenen Herstellungsprozesses von Tissuepapierprodukten zur Anwendung kommen. Neben weiteren chemischen Hilfsmitteln der Papierherstellung kann bereits bei der Suspendierung der Cellulosefasern die erfindungsgemäße Zusammensetzung zugegeben werden. Es ist auch möglich die erfindungsgemäße Zusammensetzung zur Herstellung von hydrophilen Tissuepapierprodukten vorab, d.h. vor dem Suspendierungsschritt, in dem zur Suspensionsbildung verwendeten Wasser zu lösen bzw. vorab Wasser und erfindungsgemäße Zusammensetzung zu vermischen. Die Zugabe der erfindungsgemäßen Zusammensetzung während dieser Phase der Papierherstellung hat den Vorteil in einfacher Art und Weise durchführbar zu sein. Zusätzliche Arbeitsschritte zur Erzielung eines besonders weichen und naßreißfesten Tissuepapierprodukts sind nicht notwendig. Allerdings hat diese Verfahrensvariante die Auswirkung, daß insbesondere bei mehrlagigen Tissuepapieren die chemischen Hilfsmittel, insbesondere die erfindungsgemäße Zusammensetzung und gegebenenfalls weitere Zusätze auf allen Papierlagen aufgebracht sind. Die Eigenschaften des erhaltenen Tissuepapierprodukts werden davon nicht negativ beeinflußt, das Verfahren ist aber weniger ökonomisch hinsichtlich der Einsatzmengen an chemischen Hilfsstoffen und Zusätzen.

Ein weiterer Vorteil der erfindungsgemäßen Zusammensetzungen ist es, daß sie sich auch, unter Vermeidung der geschilderten ökonomischen Nachteile, in späteren Arbeitsschritten der Tissuepapierherstellung anwenden lassen. Es ist möglich, sowohl nach der Kreppung als auch erst nach Erhalt eines mehrlagigen Papiers das erhaltene Rohtissuepapier mit der erfindungsgemäßen Zusammensetzung zu behandeln. Das rohe Tissuepapier wird bei diesen Verfahrensalternativen mit einer wäßrigen oder wasserfreien Lotion oberflächlich in Kontakt gebracht. Bevorzugt ist der Einsatz einer wasserfreien Lotion in diesem Verfahren. Der Griff und die Weichheit werden durch den Einsatz einer wasserfreien erfindungsgemäßen Zusammensetzung besonders günstig beeinflußt. Technologische Möglichkeiten zu einer solchen Lotionisierung von Tissuepapierprodukten bestehen z.B. in der Anwendung von verschiedenen Walzen- und Sprühauftragsverfahren oder Imprägnierverfahren, die dem Fachmann allgemein bekannt sind. Bevorzugt wird für dieses Verfahren eine erfindungsgemäße Zusammensetzung verwendet, die ein Austrocknen des Tissuepapiers während der Behandlung verhindert und weiter bevorzugt die Lagerung in wasserdampfdichten Verpackungen unnötig macht. Vorteilhaft am Verfahren einer derartigen Lotionisierung sind die Einsparung von chemischen Hilfsstoffen durch direkten Auftrag auf die Oberfläche von insbesondere mehrlagigen Papieren und die Möglichkeit der gezielten Beeinflussung und Modifikation der Papieroberfläche. Dies ist insbesondere von Vorteil beim Einsatz von Hautpflegeprodukten, die über die Papieroberfläche auf die Haut gelangen sollen.

Die erfindungsgemäßen Zusammensetzungen zur Herstellung von Tissuepapierprodukten sind zum Einsatz in sämtlichen der oben beschriebenen Anwendungsverfahren geeignet und bewirken eine Verbesserung der Weichheit bei sehr guter Reißfestigkeit im nassen Zustand und einer hervorragenden Hydrophilie der damit ausgerüsteten Tissuepapiere sowohl wenn sie dem Slurry, d.h. der Suspendierungsflüssigkeit, zugesetzt als auch wenn sie nachträglich als Lotion aufgetragen werden. Die erfindungsgemäßen Zusammensetzungen sind somit in jedem Verfahren der Herstellung von Tissuepapierprodukten einsetzbar.

Das auf diese Art und Weise hergestellte Tissuepapier ist hervorragend zum Einsatz als Toilettenpapier, als Gesichts- und Kosmetiktuch, als Papiertaschentuch oder als Papierhandtuch geeignet.

### Beispiele

Die vorliegende Erfindung wird durch die folgenden Ausführungsbeispiele näher beschrieben und erläutert.

### Beispiel 1:

Ein hochnaßfestes Tissuepapier der Firma Schoeller und Hoesch, charakterisiert durch ein Gewicht von 9 g/m² und einen sehr harten Griff wurde 5-lagig mit einer wäßrigen Flotte durch Tauchen behandelt, hergestellt durch Dispergieren von 2,0% einer erfindungsgemäßen Zusammensetzung bestehend aus 90% einer 50%igen Lösung eines kationisch modifizierten Polydiorganosiloxan der Formel 1a mit R = Methyl, n = 16, in Propylenglykol, charakterisiert durch eine Viskosität von ca. 470 mm²/s und eine Dichte von 1,01 g/cm³ bei 25°C, und 10% einer quaternären Ammoniumverbindung der Formel [(R¹³)ₐ(R¹⁴)_{b}(R¹⁵)_{c}N]⁺ X⁻ worin a = 2, b = 0, c = 2, ein Substituent R¹³ für eine Methylgruppe und der andere Substiutent R¹³ für eine ethoxylierte Hydroxyethylgruppe stehen, R¹⁵ für einen Rest der Formel -(CH₂)ₘ-R⁴-C(O)-R¹⁶, mit m = 2, R⁴ = NR¹², R¹² = Wasserstoff und R¹⁶ = Lauryl, steht und und X⁻ = Methosulfat ist. Das getauchte Tissuepapier wurde mit einer Handleimpresse abgepreßt und anschließend auf einer Fotopresse 5 Minuten bei einer Temperatur von 100°C kontaktgetrocknet.

### Beispiel 2:

Das in Beispiel 1 beschriebene Behandlungsverfahren wurde mit einer Flotte wiederholt, hergestellt durch Dispergieren von 2,0% einer erfindungsgemäßen Zusammensetzung bestehend aus 90% einer 95%igen Lösung eines kationisch modifizierten Polydiorganosiloxan der Formel 1a mit R = Methyl, n = 80, in Propylenglykol, charakterisiert durch eine Viskosität von ca. 3000 mm²/s und eine Dichte von 1,0 g/cm³ bei 25°C, und 10% einer quaternären Ammoniumverbindung der Formel [(R¹³)ₐ(R¹⁴)_{b}(R¹⁵)_{c}N]⁺ X⁻ wie sie in Beispiel 1 beschrieben wurde.

### Beispiel 3:

Das in Beispiel 1 beschriebene Behandlungsverfahren wurde mit einer Flotte wiederholt, hergestellt durch Dispergieren von 2,0% einer erfindungsgemäßen Zusammensetzung bestehend aus 70% einer 95%igen Lösung eines kationisch modifizierten Polydiorganosiloxan der Formel 1a mit R = Methyl, n = 80, in Propylenglykol, charakterisiert durch eine Viskosität von ca. 3000 mm²/s und eine Dichte von 1,0 g/cm³ bei 25°C, 10% einer quaternären Ammoniumverbindung der Formel [(R¹³)ₐ(R¹⁴)_{b}(R¹⁵)_{c}N]⁺ X⁻ wie sie in Beispiel 1 beschrieben wurde und 20% einer 50%igen kationischen Paraffinwachsdispersion, charakterisiert durch einen Schmelzpunkt des Paraffinwachses von 45°C.

### Beispiel 4 (nicht erfindungsgemäßes Vergleichsbeispiel):

Das in Beispiel 1 beschriebene Behandlungsverfahren wurde mit einer Flotte wiederholt, hergestellt durch Dispergieren von 2,0% einer Zusammensetzung bestehend aus 10% Paraffinum perliquidum, 4% Ditallowdimethylammoniumchlorid, 15% des Polysiloxans Tegopren TM 3021, eines Polyethersiloxans, charakterisiert durch über Si-O-C-Bindungen an einen Teil der Siliciumatome gebundene Polyethergruppen und einen Trübungspunkt von 38°C, und 71 % Wasser.

### Beispiel 5 (nicht erfindungsgemäßes Vergleichsbeispiel):

Das in Beispiel 1 beschriebene Behandlungsverfahren wurde mit einer Flotte wiederholt, hergestellt durch Dispergieren von 2,0% des Polysiloxans Tegopren 6950, eines Siliconbetains, charakterisiert durch eine Oberflächenspannung von 25mN/m in 1%iger wäßriger Lösung bei 25°C.

### Beispiel 6 (nicht erfindungsgemäßes Vergleichsbeispiel):

Das in Beispiel 1 beschriebene Behandlungsverfahren wurde mit einer Flotte wiederholt, hergestellt durch Dispergieren von 2,0% einer Zusammensetzung bestehend aus 80% einer quaternären Ammoniumverbindung der Formel [(R¹³)ₐ(R¹⁴)_{b}(R¹⁵)_{c}N]⁺ X⁻ worin a = 2, b = 0, c = 2, ein Substituent R¹³ für eine Methylgruppe und der andere Substiutent R¹³ für eine ethoxylierte Hydroxyethylgruppe stehen, R¹⁵ für einen Rest der Formel -(CH₂)ₘ-R⁴-C(O)-R¹⁶, mit m = 2, R⁴ = NR¹², R¹² = Wasserstoff und R¹⁶= Lauryl, steht und X- = Methosulfat ist, und 20% Wasser.

Die erhaltenen Tissuepapiermuster wurden einen Tag bei 23°C und 65% Luftfeuchtigkeit klimatisiert. Anschließend wurde manuell die Weichheit der Tissuepapiere durch mehrere Testpersonen beurteilt und die Ergebnisse dann gemittelt.

Die Wasseraufnahme wurde durch folgenden Test nach DIN ISO 287 (Saughöhe nach KLEMM) beurteilt:

Streifen von 200 mm Länge und 15 mm Breite der behandelten Tissuepapiere wurden normgerecht präpariert, in der dafür vorgesehenen Aufhängevorrichtung befestigt und unter Normbedingungen gemeinsam in entionisiertes Wasser getaucht und unmittelbar danach die Zeitmessung gestartet. Nach 10 Minuten wurde die Saughöhe gemessen. Vor jeder Prüfung wurde das Wasser gegen frisches Wasser ausgetauscht. Die Einzelmesswerte gleichartig behandelter Tissuepapiere wurden gemittelt und auf volle Millimeter gerundet.

Die Ergebnisse der Griffbeurteilung und die Saughöhe der einzelnen Tissuepapiere werden in der folgenden Tabelle zusammengefaßt. Die Beurteilung der Weichheit erfolgt dabei nach dem Schulnotenprinzip (1 - sehr gut, 2 - gut, 3 - befriedigend, 4 - ausreichend, 5-mangelhaft).

**Tabelle**

| Beispiel | Beurteilung Weichheit | Saughöhe in mm |
|---|---|---|
| 1 | Befriedigend (3) | 63 |
| 2 | Sehr gut (1-) | 58 |
| 3 | Sehr gut (1) | 52 |
| 4 | Ausreichend (4) | 55 |
| 5 | Gut (2+) | 15 |
| 6 | Mangelhaft (5) | 3 |

## Patentansprüche

1. Wasserhaltige oder wasserfreie Zusammensetzung zur Behandlung eines Papierprodukts auf Basis von Cellulosefasern, **dadurch gekennzeichnet, daß** sie bezogen auf die gesamte Zusammensetzung
A) 1 - 99 Gewichtsprozent mindestens eines kationisch modifizierten Diorganosiloxans oder Polydiorganosiloxans der Formeln 1a, 1b oder 1c 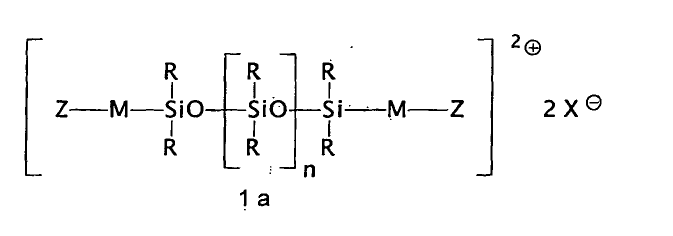 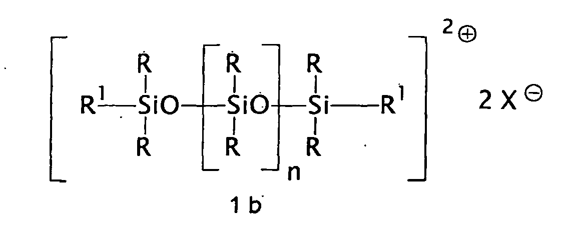 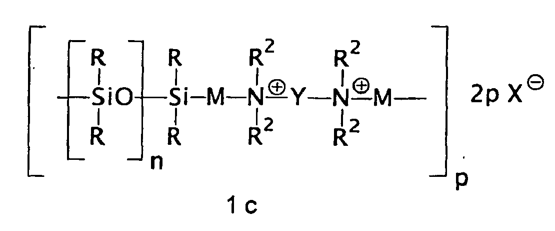 worin der Rest Z eine der folgenden Gruppen 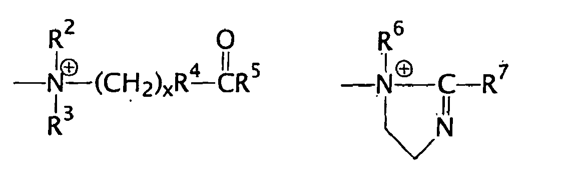 die Reste R gleiche oder verschiedene Alkyl- oder Cycloalkylreste mit 1 bis 30 Kohlenstoffatomen, Alkenylreste mit 2 bis 30 Kohlenstoffatomen, Aryl- oder Alkylarylreste mit 6 bis 20 Kohlenstoffatomen, Polyoxyalkylengruppen der allgemeinen Formel -(CHR)_{q}-O-(CᵣH₂ᵣO)ₛ-R⁸ oder durch Halogenide substituierte Alkylreste mit 1 bis 30 Kohlenstoffatomen sind,
der Rest R¹ 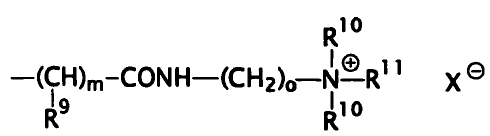 ist,
die Reste R² und R³ gleiche oder verschiedene Alkylreste mit 1 bis 30 Kohlenstoffatomen, Alkenylreste mit 2 bis 30 Kohlenstoffatomen, Aryl-CH₂-Reste sind oder jeweils Bestandteil eines verbrückenden Alkylenrestes sind, wobei sowohl die Alkyl- als auch die Alkenylreste Hydroxylgruppen aufweisen können,
der Rest R⁴ ein -0- oder -NR¹²-Rest ist, wobei R¹² ein Alkyl- oder Hydroxyalkylrest mit 1 bis 4 Kohlenstoffatomen oder ein Wasserstoffatom darstellt,
die Reste R⁵, R⁶, R⁷ Alkylreste mit 1 bis 30 Kohlenstoffatomen oder Alkenylreste mit 2 bis 30 Kohlenstoffatomen sind, wobei sowohl die Alkyl- als auch die Alkenylreste Hydroxylgruppen aufweisen können,
R⁸ ein Wasserstoff, ein Acetoxyrest oder ein Alkylrest mit 1 bis 4 Kohlenstoffatomen ist,
R⁹ ein Wasserstoff oder Methylrest ist,
R¹⁰ ein Alkyl-, Alkenyl- oder Hydroxyalkylrest mit 1-3 Kohlenstoffatomen ist,
R¹¹ gleich R¹⁰ oder Aryl-CH₂- oder ein Allylrest ist,
M ein zweiwertiger Kohlenwasserstoffrest mit mindestens 4 Kohlenstoffatomen ist, der eine Hydroxylgruppe aufweisen kann und in der Kohlenstoffatomkette ein Sauerstoffatom aufweisen kann,
Y ein zweiwertiger Kohlenwasserstoffrest mit mindestens 2 Kohlenstoffatomen ist, der eine Hydroxylgruppe aufweisen und in der Kohlenstoffkette ein Sauerstoff- oder Stickstoffatom aufweisen kann,
n eine Zahl von 0 bis 200, wobei n in Formel 1c mindestens 1 beträgt,
m eine Zahl von 2 bis 10,
p eine Zahl ≥ 1,
x eine Zahl von 2 bis 4,
o eine Zahl von 2 bis 4,
q eine Zahl von 3 bis 8,
r eine Zahl von 2 bis 4,
s eine Zahl von 0 bis 100 und
X⁻ ein organisches oder anorganisches Anion ist,
B) 0,01 bis 79 Gewichtsprozent einer quaternären Ammoniumverbindung der Formel [(R¹³)ₐ(R¹⁴)_{b}(R¹⁵)_{c}N]⁺ X⁻ worin
R¹³ ein Alkyl-, Hydroxyalkylrest mit 1 bis 8 Kohlenstoffatomen, oder ein ethoxylierter Hydroxyalkylrest mit insgesamt 2 bis 30 Kohlenstoffatomen,
R¹⁴ ein gesättigter oder ungesättigter Kohlenwasserstoffrest mit 1 bis 30 Kohlenstoffatomen,
R¹⁵ ein Rest der Formel -(CH₂)ₘ-R⁴-C(O)-R¹⁶,
R¹⁶ ein gesättigter oder ungesättigter Kohlenwasserstoffrest mit 1 bis 24 Kohlenstoffatomen, a eine ganze Zahl von 2 oder 3,
b eine ganze Zahl von 0 bis 2,
c eine ganze Zahl von 0 bis 2,
wobei die Summe a + b + c = 4,
die Summe b + c = 1 oder 2
und m, R⁴ und X⁻ die oben genannten Bedeutungen haben,
oder Mischungen derselben enthält.

2. Zusammensetzung nach Anspruch 1, **dadurch gekennzeichnet, daß** sie femer bis zu 20 Gewichtsprozent Wachs mit einem Schmelzpunkt von ≥ 35°C ausgewählt aus Camaubawachs, Palmwachs, Bienenwachs, Wollwachs, Paraffin, Polyethylenwachs enthält.

3. Zusammensetzung nach Anspruch 1 oder Anspruch 2, **dadurch gekennzeichnet, daß** sie femer mehrwertigen Alkohol enthält.

4. Zusammensetzung nach Anspruch 3, **dadurch gekennzeichnet, daß** der mehrwertige Alkohol Propylenglykol, Dipropylenglycol, Polypropylenglycol, Polyethylenglycol, Glyzerin oder Mischungen derselben ist.

5. Zusammensetzung nach einem der vorhergehenden Ansprüche, **dadurch gekennzeichnet, daß** M ein zweiwertiger Rest mit 4 bis 9 Kohlenstoffatomen ist.

6. Zusammensetzung nach einem der vorhergehenden Ansprüche, **dadurch gekennzeichnet, daß** Y ein zweiwertiger Rest mit 2 bis 4 Kohlenstoffatomen ist.

7. Zusammensetzung nach einem der vorhergehenden Ansprüche, **dadurch gekennzeichnet, daß** M ein zweiwertiger Rest, ausgewählt aus der Gruppe 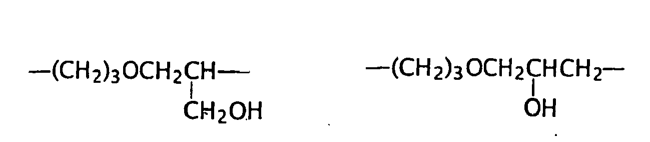 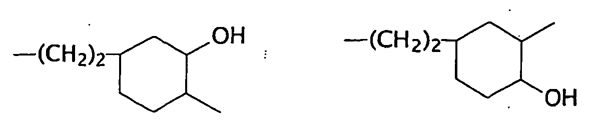 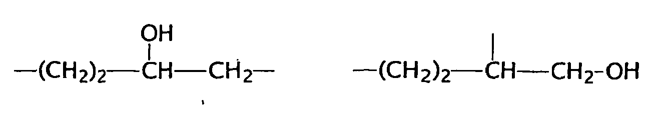 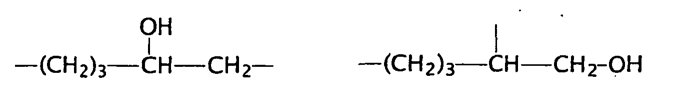 ist, wobei das N-Atom des Restes Z mit dem Rest M über das Kohlenstoffatom verbunden ist, das zu dem Kohlenstoffatom benachbart ist, das im Rest M die Hydroxylgruppe trägt, und X- ein organisches oder anorganisches Anion einer Säure HX ist.

8. Zusammensetzung nach einem der Ansprüche 1 bis 5, **dadurch gekennzeichnet, daß** das kationisch modifizierte Pölydiorganosiloxan der Formel 1 a entspricht,
M ein zweiwertiger Rest ist, ausgewählt aus der Gruppe 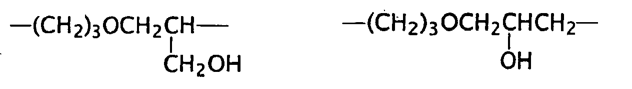 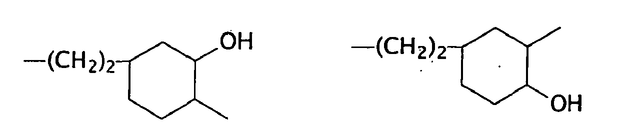
R, R², R³ Methylgruppen sind,
der Rest R⁴ ein Rest -NR¹²- ist, wobei R¹² eine Alkylgruppe mit 1 bis 4 Kohlenstoffatomen oder einem Wasserstoffatom ist,
die Reste R⁵ und R⁷ Alkylreste mit 8 bis 20 Kohlenstoffatomen sind,
x=3,
n = 6 bis 100 sind, und
X⁻ ein Acetation ist.

9. Verfahren zur Herstellung eines hydrophilen Papierprodukts enthaltend, bezogen auf das Fasertrockengewicht, mind. 50 % Cellulosefasern und höchstens 50 % Celluloseregenerat- oder Synthesefasern, **dadurch gekennzeichnet, daß** die Fasern mit 0,1 bis 1 Gew-.%, bezogen auf das Fasertrockengewicht, einer Zusammensetzung gemäß einem der Ansprüche 1 bis 8 behandelt werden.

10. Verwendung einer Zusammensetzung gemäß einem der Ansprüche 1 bis 8 zur Behandlung von einem Papierprodukt enthaltend, bezogen auf das Fasertrockengewicht, mind. 50 % Cellulosefasern und höchstens 50 % Celluloseregenerat- oder Synthesefasern oder zur Behandlung des entsprechenden Ausgangsmaterials oder der Zwischenprodukte des Papierprodukts.

11. Hydrophiles Papierprodukt enthaltend, bezogen auf das Trockenfasergewicht, mind. 50 % Cellulosefasern und höchstens 50 % Celluloseregenerat- oder Synthesefasem, **dadurch gekennzeichnet, daß** es mit 0,1 bis 1 Gew-.%, bezogen auf das Fasertrockengewicht, einer Zusammensetzung gemäß einem der vorhergehenden Ansprüche 1 bis 8 behandelt worden ist.

12. Hydrophiles Papierprodukt, **dadurch gekennzeichnet, daß** es 0,1 bis 1 Gew-.%, bezogen auf das Fasertrockengewicht, einer Zusammensetzung gemäß einem der Ansprüche 1 bis 8 enthält.

13. Hydrophiles Papierprodukt nach den Ansprüchen 11 oder 12, **dadurch gekennzeichnet, daß** es als Papiertaschentuch, Kosmetikpapier, Papierhandtuch, Küchentuch, Toilettenpapier, Wischtuch, Bestandteil von Inkontinenzprodukten oder als Serviette vorliegt.

## Claims

1. Water-containing or anhydrous composition for the treatment of a paper product based on cellulose fibres, **characterised in that** it comprises, based on the total composition
A) 1 - 99 weight percent of at least one cationically modified diorganosiloxane or polydiorganosiloxane of formulae 1 a, 1 b or 1 c 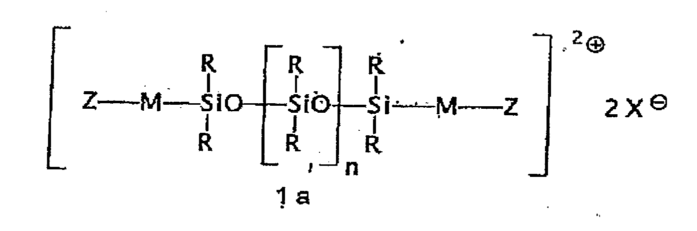 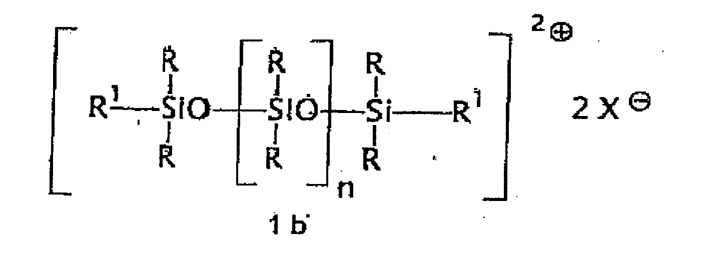 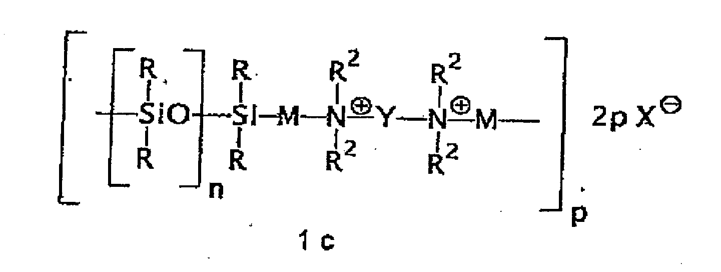 in which the group Z is one of the following groups 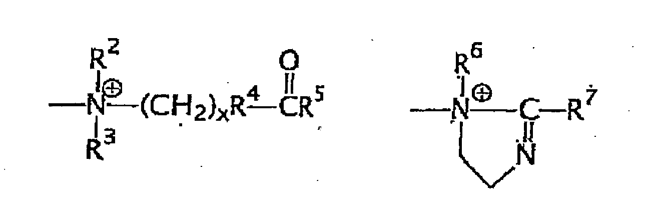 the groups R are the same or different alkyl or cycloalkyl groups containing 1 to 30 carbon atoms, alkenyl groups containing 2 to 30 carbon atoms, aryl or alkylaryl groups containing 6 to 20 carbon atoms, polyoxyalkylene groups of the general formula -(CHR)_{q}-O-(CᵣH₂ᵣO)ₛ-R⁸ or halide substituted alkyl groups containing 1 to 30 carbon atoms,
the group R¹ is 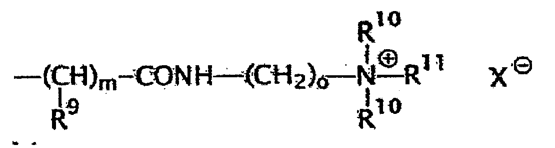
the groups R² and R³ are the same or different alkyl groups containing 1 to 30 carbon atoms, alkenyl groups containing 2 to 30 carbon atoms, Aryl-CH₂ groups or are each components of a bridging alkylene group, wherein both the alkyl and the alkenyl groups can also have hydroxyl groups,
the group R⁴ is a -O- or NR¹² group, wherein R¹² represents an alkyl or hydroxyalkyl group containing 1 to 4 carbon atoms or a hydrogen atom,
the groups R⁵, R⁶, R⁷ are alkyl groups containing 1 to 30 carbon atoms or alkenyl groups containing 2 to 30 carbon atoms, wherein both the alkyl and the alkenyl group can also have hydroxyl groups,
R⁸ is hydrogen, an acetoxy group or an alkyl group containing 1 to 4 carbon atoms,
R⁹ is hydrogen or a methyl group,
R¹⁰ is an alkyl, alkenyl or hydroxyalkyl group containing 1-3 carbon atoms,
R¹¹ is the same as R¹⁰ or aryl-CH₂- or an allyl group,
M is a divalent hydrocarbon group containing at least 4 carbon atoms, which can have a hydroxyl group and can have an oxygen atom in the carbon atom chain,
Y is a divalent hydrocarbon group containing at least 2 carbon atoms, which can have a hydroxyl group and can have an oxygen atom or nitrogen atom in the carbon chain,
n is a number from 0 to 200, wherein in formula 1c, n is at least 1,
m is a number from 2 to 10,
p is a number ≥ 1,
x is a number from 2 to 4,
o is a number from 2 to 4,
q is a number from 3 to 8,
r is a number from 2 to 4,
s is a number from 0 to 100 and
X⁻ is an organic or inorganic anion,
B) 0.01 to 79 weight percent of a quaternary ammonium compound of the formula [(R¹³)ₐ(R¹⁴)_{b}(R¹⁵)_{c}N]⁺ X⁻ in which
R¹³ is an alkyl-, hydroxyalkyl group containing 1 to 8 carbon atoms, or an ethoxylated hydroxyalkyl group containing 2 to 30 carbon atoms in total,
R¹⁴ is a saturated or unsaturated hydrocarbon group containing 1 to 30 carbon atoms,
R¹⁵ is a group of the formula -(CH₂)ₘ-R⁴-C(O)-R¹⁶,
R¹⁶ is a saturated or unsaturated hydrocarbon group containing 1 to 24 carbon atoms,
a is a whole number 2 or 3,
b is a whole number from 0 to 2,
c is a whole number from 0 to 2,
wherein the sum a + b + c = 4,
the sum b + c = 1 or 2
and m, R⁴ and X⁻ have the abovementioned meanings,
or comprises mixtures thereof.

2. Composition according to claim 1, **characterised in that** it further comprises up to 20 weight percent wax with a melting point of ≥ 35 °C, selected from carnauba wax, palm wax, beeswax, wool wax, paraffin, polyethylene wax.

3. Composition according to claim 1 or claim 2, **characterised in that** it further comprises polyhydric alcohol.

4. Composition according to claim 3, **characterised in that** the polyhydric alcohol is propylene glycol, dipropylene glycol, polypropylene glycol, polyethylene glycol, glycerin or mixtures thereof.

5. Composition according to one of the preceding claims, **characterised in that** M is a divalent group containing 4 to 9 carbon atoms.

6. Composition according to one of the preceding claims, **characterised in that** Y is a divalent group containing 2 to 4 carbon atoms.

7. Composition according to one of the preceding claims, **characterised in that** M is a divalent group, selected from the group 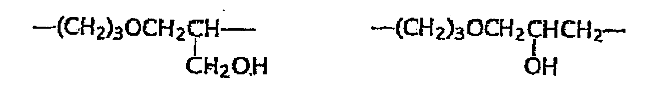 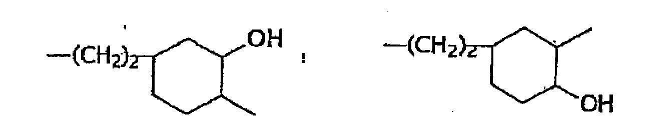 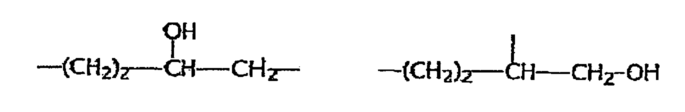 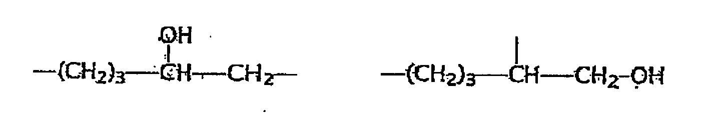 wherein the nitrogen atom of the group Z is bonded to the group M through a carbon atom that neighbours the carbon atom that carries the hydroxyl group in the M group, and X⁻ is an organic or inorganic anion of an acid HX.

8. Composition according to one of claims 1 to 5, **characterised in that** the cationically modified polydiorganosiloxane corresponds to formula 1a,
M is a divalent group, selected from the group 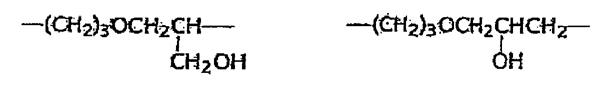 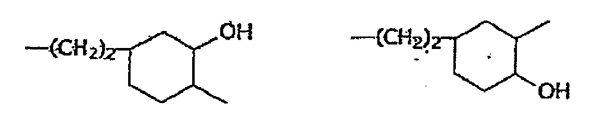
R, R², R³ are methyl groups,
the group R⁴ is an NR¹² group, wherein R¹² is an alkyl group containing 1 to 4 carbon atoms or is a hydrogen atom,
the groups R⁵ and R⁷ are alkyl groups containing 8 to 20 carbon atoms,
x=3,
n = 6 to 100, and
X⁻ is an acetate ion.

9. Process for the manufacture of a hydrophilic paper product comprising, based on the dry fibre weight, at least 50 % cellulose fibres and at most 50 % cellulose regenerate fibres or synthetic fibres, **characterised in that** the fibres are treated with 0.1 to 1 wt.%, based on the dry fibre weight, of a composition according to one of the claims 1 to 8.

10. Use of a composition according to one of the claims 1 to 8 for the treatment of a paper product comprising, based on the dry fibre weight, at least 50 % cellulose fibres and at most 50 % cellulose regenerate fibres or synthetic fibres or for the treatment of the corresponding starting materials or the intermediate products of the paper product.

11. Hydrophilic paper product comprising, based on the dry fibre weight, at least 50 % cellulose fibres and at most 50 % cellulose regenerate fibres or synthetic fibres, **characterised in that** it has been treated with 0.1 to 1 wt.%, based on the dry fibre weight, of a composition according to one of the claims 1 to 8.

12. Hydrophilic paper product, **characterised in that** it comprises 0.1 to 1 wt.%, based on the dry fibre weight, of a composition according to one of the claims 1 to 8.

13. Hydrophilic paper product according to the claims 11 or 12, **characterised in that** it exists as paper handkerchief, cosmetic paper, paper towel, kitchen towel, toilet paper, wipe, component of incontinence products or as napkins.

## Revendications

1. Composition contenant de l'eau ou exempte d'eau pour le traitement d'un produit de papier à base de fibres de cellulose, **caractérisée en ce qu'**elle contient, par rapport à la composition complète,
A) 1-99 pour cent en poids d'au moins un diorganosiloxane ou un polydiorganosiloxane, modifié du point de vue cationique, des formules 1a, 1b, ou 1c 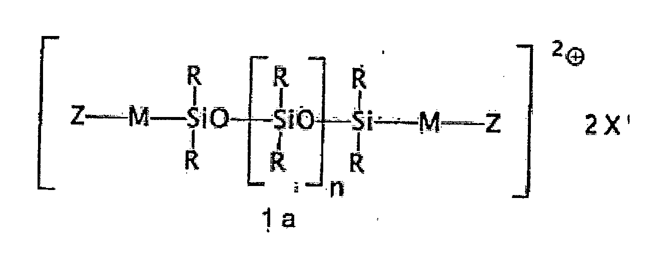 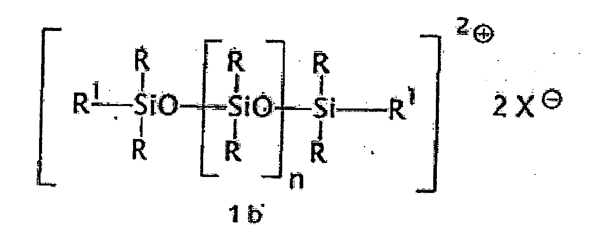 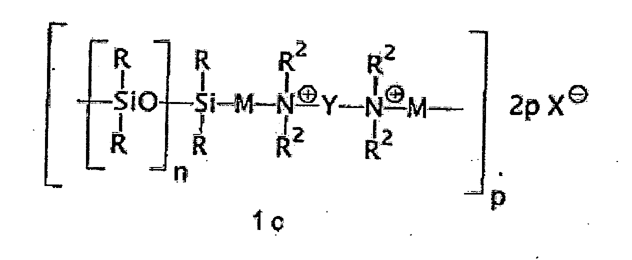 où le radical Z est un des groupements suivants 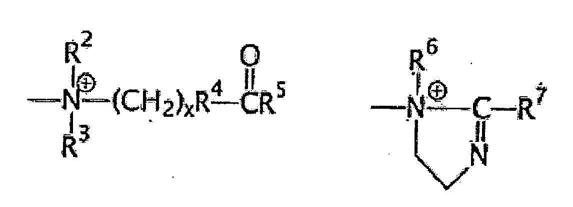 les radicaux R sont des radicaux alkyles ou cycloalkyles, identiques ou différents, ayant de 1 à 30 atomes de carbone, des radicaux alcényle ayant de 2 à 30 atomes de carbone, des radicaux aryles ou alkylaryles ayant de 6 à 20 atomes de carbone, des groupements polyoxyalkyles de formule générale -(CHR)_{q}-O-(CᵣH₂ᵣO)ₛ-R⁸ ou des radicaux substitués par des halogénures, ayant de 1 à 30 atomes de carbone,
le radical R¹ est 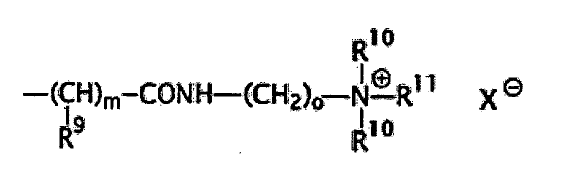
les radicaux R² et R³ sont des radicaux alkyles, identiques ou différents, ayant de 1 à 30 atomes de carbone, des radicaux alcényles ayant de 2 à 30 atomes de carbone, des radicaux aryle-CH₂- ou sont, à chaque fois, constituant d'un radical alcényle formant pontage, non seulement les radicaux alkyles mais aussi les radicaux alcényles pouvant présenter des groupements hydroxyles,
le radical R⁴ est un radical -O- ou -NR¹²-, R¹² représentant un radical alkyle ou hydroxyalkyle ayant de 1 à 4 atomes de carbone ou un atome d'hydrogène,
les radicaux R⁵, R⁶, R⁷ sont des radicaux alkyles ayant de 1 à 30 atomes de carbone ou des radicaux alcényles ayant de 2 à 30 atomes de carbone, non seulement les radicaux alkyles mais aussi les radicaux alcényles pouvant présenter des groupements hydroxyles,
R⁸ est un hydrogène, un radical acétoxy ou un radical alkyle ayant de 1 à 4 atomes de carbone,
R⁹ est un hydrogène ou un radical méthyle,
R¹⁰ est un radical alkyle, alcényle ou hydroxyalkyle ayant de 1 à 3 atomes de carbone,
R¹¹ est égal à R¹⁰ ou aryle-CH₂- ou est un radical allyle,
M est un radical hydrocarboné divalent, ayant au moins 4 atomes de carbone, qui peut présenter un groupement hydroxyle et, dans la chaîne de carbone, un atome d'oxygène,
Y est un radical hydrocarboné divalent, ayant au moins 2 atomes de carbone, qui peut présenter un groupement hydroxyle et, dans la chaîne hydrocarbonée, un atome d'oxygène ou d'azote,
n est un nombre de 0 à 200, n dans la formule 1c étant au moins 1,
m est un nombre 2 à 10,
p est un nombre ≥ 1,
x est un nombre de 2 à 4,
o est un nombre de 2 à 4,
q est un nombre de 3 à 8,
r est un nombre de 2 à 4,
s est un nombre de 0 à 100 et
X⁻ est un anion organique ou inorganique,
B) de 0,01 à 79 pour cent en poids d'un composé d'ammonium quaternaire de la formule [(R¹³)ₐ(R¹⁴)_{b}(R¹⁵)_{c}N]⁺X⁻ où
R¹³ est un radical alkyle, hydroxyalkyle ayant de 1 à 8 atomes de carbone ou un radical hydroxyalkyle éthoxylé ayant, en tout, de 2 à 30 atomes de carbone,
R¹⁴ est un radical hydrocarboné saturé ou insaturé, ayant de 1 à 30 atomes de carbone, R¹⁵ est un radical de la formule -(CH₂)ₘ-R⁴-C(O)-R¹⁶,
R¹⁶ est un radical hydrocarboné saturé ou insaturé, ayant de 1 à 24 atomes de carbone,
a est un nombre entier de 2 ou 3,
b est un nombre entier de 0 à 2,
c est un nombre entier de 0 à 2,
dans laquelle la somme a + b + c = 4,
la somme b + c = 1 ou 2,
et m, R⁴ et X- ont les significations suscitées,
ou des mélanges de ceux-ci.

2. Composition selon la revendication 1, **caractérisée en ce qu'**elle contient, en outre, jusqu'à 20 pour cent en poids de cire, ayant un point de fusion de ≥ 35°C, sélectionnée parmi la cire de carnauba, la cire de palme, la cire d'abeilles, la cire de laine, la paraffine, la cire de polyéthylène.

3. Composition selon la revendication 1 ou la revendication 2, **caractérisée en ce qu'**elle contient, en outre, un alcool polyhydrique.

4. Composition selon la revendication 3, **caractérisée en ce que** l'alcool polyhydrique est le propylèneglycol, le dipropylèneglycol, le polypropylèneglycol, le polyéthylèneglycol, la glycérine ou des mélanges de ceux-ci.

5. Composition selon l'une quelconque des revendications précédentes, **caractérisée en ce que** M est un radical divalent ayant de 4 à 9 atomes de carbone.

6. Composition selon l'une quelconque des revendications précédentes, **caractérisée en ce que** Y est un radical divalent ayant de 2 à 4 atomes de carbone.

7. Composition selon l'une quelconque des revendications précédentes, **caractérisée en ce que** M est un radical divalent, choisi dans le groupe constitué de 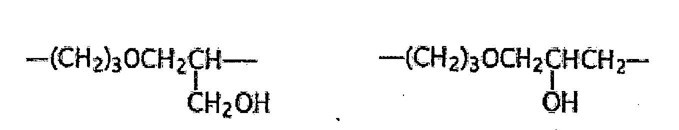 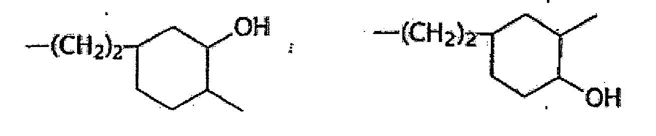 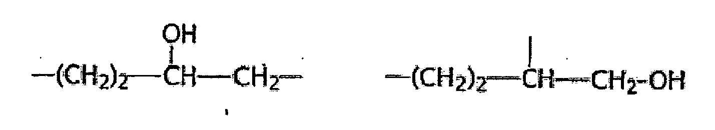 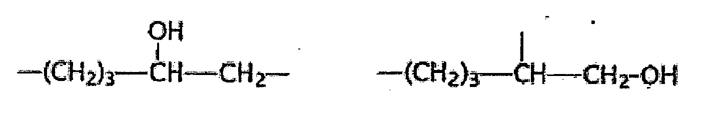 l'atome N du radical Z étant relié au radical M par l'intermédiaire de l'atome de carbone, qui est voisin de l'atome de carbone qui porte dans le radical M un groupement hydroxyle et X⁻ est un anion organique ou inorganique d'un acide HX.

8. Composition selon l'une quelconque des revendications précédentes 1 à 5, **caractérisée en ce que** le polydiorganosiloxane modifié par voie cationique correspond à la formule 1a, M est un radical divalent, choisi dans le groupe constitué de 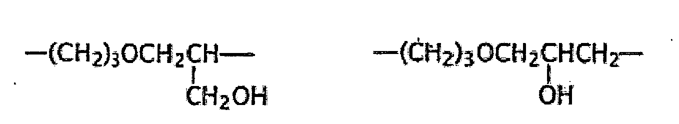 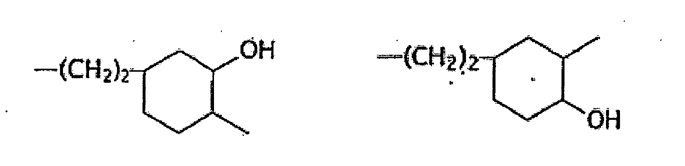
R, R², R³ sont des groupements méthyles,
le radical R⁴ est un radical -NR¹²-, R¹² étant un groupement alkyle ayant de 1 à 4 atomes de carbone ou est un atome d'hydrogène,
les radicaux R⁵ et R⁷ sont des radicaux alkyles ayant de 8 à 20 atomes de carbone,
x = 3,
n = 6 à 100, et
X⁻ est un ion acétate.

9. Procédé de fabrication d'un produit de papier hydrophile contenant, par rapport au poids des fibres sèches, au moins 50% de fibres de cellulose et au plus 50% de fibres de régénérat de cellulose ou de fibres synthétiques, **caractérisé en ce que** les fibres sont traitées à l'aide de 0,1 à 1 % en poids, par rapport au poids des fibres sèches, d'une composition selon l'une des revendications 1 à 8.

10. Utilisation d'une composition selon l'une quelconque des revendications 1 à 8 pour le traitement d'un produit de papier, contenant, par rapport au poids des fibres sèches, au moins 50% de fibres de cellulose et au plus 50% de fibres de régénérat de cellulose ou de fibres de synthèse ou pour le traitement du matériau de départ correspondant ou des produits intermédiaires du produit de papier.

11. Produit de papier hydrophile contenant, par rapport au poids des fibres sèches, au moins 50% de fibres de cellulose et au plus 50% de fibres de régénérat de cellulose ou de fibres de synthèse, **caractérisé en ce qu'**il a été traité à l'aide de 0,1 à 1 % en poids, par rapport au poids des fibres sèches, d'une composition selon l'une des revendications précédentes 1 à 8.

12. Produit de papier hydrophile, **caractérisé en ce qu'**il contient de 0,1 à 1 % en poids, par rapport au poids des fibres sèches, d'une composition selon l'une des revendications 1 à 8.

13. Produit de papier hydrophile selon les revendications 11 ou 12, **caractérisé en ce qu'**il est disponible en tant que mouchoir en papier, papier cosmétique, serviette en papier, papier de cuisine, papier toilette, chiffon, constituant de produits pour le traitement de l'incontinence ou en tant que serviette.
